# EUROPEAN PATENT APPLICATION

(11) **EP 4 579 878 A1**
(43) Date of publication of application: **02.07.2025**
(21) Application number: 23933720.7
(22) Date of filing: 26.09.2023
(51) Int. Cl.: H01M 10/613, H01M 10/6557, H01M 10/6566, H01M 10/6568, H01M 10/647, H01M 10/625, H01M 50/291, H01M 50/249, H01M 50/209

(54) **BATTERY AND ELECTRICAL DEVICE**

(30) Priority: 17.04.2023 CN 202310402423
(71) Applicant: Contemporary Amperex Technology (Hong Kong) Limited, Central (HK)
(72) Inventor: WU, Kai, Ningde, Fujian 352100 (CN); YANG, Haiqi, Ningde, Fujian 352100 (CN); HUANG, Xiaoteng, Ningde, Fujian 352100 (CN); WANG, Wenli, Ningde, Fujian 352100 (CN); TANG, Yu, Ningde, Fujian 352100 (CN); XU, Chenyi, Ningde, Fujian 352100 (CN)
(74) Representative: Gong, Jinping
(86) International application number: PCT/CN2023/121566
(87) International publication number: WO 2024/216850

(57) **Abstract**

Embodiments of this application provide a battery and an electric device. The battery includes a battery cell and a thermal management component. The thermal management component is opposite the battery cell along a first direction and connected to a first wall of the battery cell, the first wall is a wall with a largest surface area of the battery cell, and the first direction is perpendicular to the first wall. The thermal management component includes a flow channel, and the flow channel is used for accommodating a heat exchange medium, so as to regulate a temperature of the battery cell; where the flow channel is configured to provide a swelling space for the battery cell. The battery and the electric device in the embodiments of this application can improve the reliability of the battery.

## Description

This application claims priority to Chinese Patent Application No. 202310402423.5, filed with the China National Intellectual Property Administration on April 17, 2023 and entitled "BATTERY AND ELECTRIC DEVICE", which is incorporated herein by reference in its entirety.

### TECHNICAL FIELD

This application relates to the field of battery technologies, and in particular, to a battery and an electric device.

### BACKGROUND

With increasing environmental pollution, the new energy industry has attracted growing attention. Battery technologies are an important factor in the development of the new energy industry.

Multiple performance parameters of the battery need to be considered for the performance of the battery. Therefore, how to improve the performance of the battery is a technical problem to be resolved urgently in the battery technologies.

### SUMMARY

This application provides a battery and an electric device, which can improve the performance of the battery.

According to a first aspect, a battery is provided, including a battery cell and a thermal management component. The thermal management component is opposite the battery cell along a first direction and connected to a first wall of the battery cell, the first wall is a wall with a largest surface area of the battery cell, the first direction is perpendicular to the first wall, the thermal management component includes a flow channel, and the flow channel is used for accommodating a heat exchange medium, so as to regulate a temperature of the battery cell. The flow channel is configured to provide a swelling space for the battery cell; and the thermal management component includes a heat conducting plate, the heat conducting plate is thermally connected to the first wall to exchange heat with the battery cell, and the heat conducting plate is configured to be deformable to provide a swelling space for the battery cell.

In embodiments of this application, the thermal management component is disposed in the battery and connected to the first wall with the largest surface area of the battery cell, where the thermal management component includes the flow channel, and the flow channel is used for accommodating a heat exchange medium, so as to regulate the temperature of the battery cell, and is configured to provide a swelling space for the battery cell. Disposing the flow channel for accommodating a heat exchange medium in the thermal management component can improve the thermal management performance of the thermal management component and enhance the heat exchange effect between the battery cell and the thermal management component. Configuring the flow channel to be deformable when the battery cell swells provides a swelling space for the battery cell, which can reduce stress concentration within the battery cell when the battery cell swells, thereby improving the reliability and service life of the battery. As the thermal management component is connected to the wall with the largest surface area of the battery cell, the heat exchange area between the battery cell and the thermal management component can be increased as much as possible, thereby increasing the heat exchange amount and guaranteeing the performance of the thermal management component. In addition, when the battery cell swells, the thermal management component can provide it a sufficient swelling space. The heat conducting plate connected to the first wall for heat exchange is deformable, allowing the thermal management component to deform to better adapt to the swelling of the battery cell. Therefore, the technical solutions of the embodiments of this application can improve the reliability and service life of the battery while guaranteeing thermal management within the battery, thereby improving the performance of the battery.

In some possible embodiments of the first aspect, the size W of the flow channel in the first direction and the size D1 of the battery cell in the first direction satisfy 0.0025≤W/D1≤1. When the ratio W/D1 of the size W of the flow channel in the first direction to the size D1 of the battery cell in the first direction is excessively large, the size W of the flow channel in the first direction may be at a maximum value, while the size D1 of the battery cell in the first direction may be at a minimum value. In this case, although the flow channel can provide a sufficient swelling space for the battery cell, the volumetric energy density of the battery is reduced, so this ratio should not be excessively large. When this ratio is excessively small, the size W of the flow channel in the first direction may be at a minimum value, while the size D1 of the battery cell may be at a maximum value. In this case, although the volumetric energy density of the battery is large, the flow channel cannot provide a sufficient swelling space for the battery cell, and it is also difficult to meet the thermal management requirement well, so this ratio should not be excessively small either. When 0.0025≤W/D1≤1, a large swelling space can be provided for the battery cell while the volumetric energy density and the thermal management requirement can be balanced.

In some possible embodiments of the first aspect, 0.01≤W/D1≤0.8, such that better balance can be achieved for providing a swelling space for the battery cell and meeting the thermal management requirement of the battery.

In some possible embodiments of the first aspect, the size W of the flow channel in the first direction satisfies 0.2 mm≤W≤10 mm. When W is excessively large, the volume of the thermal management component is excessively large, affecting the volumetric energy density of the battery, so the value of W should not be excessively large. When W is excessively small, it is difficult to provide a sufficient swelling space for the battery cell, which also affects the thermal management performance of the thermal management component, so the value of W should not be excessively small either. When the size W of the flow channel in the first direction satisfies 0.2 mm≤W≤10 mm, a sufficient swelling space can be provided for the battery cell, while the performance of the thermal management component and the volumetric energy density of the battery can be balanced.

In some possible embodiments of the first aspect, the thermal management component includes a pair of heat conducting plates opposite each other along the first direction and a first connecting rib connecting the pair of heat conducting plates. The first connecting rib and the pair of heat conducting plates form the flow channel, and one of the pair of heat conducting plates is thermally connected to the first wall to exchange heat with the battery cell. In the above embodiments, as the first connecting rib and the heat conducting plates are arranged to form the flow channel, the distribution of the heat exchange medium in the thermal management component can be adjusted by changing the number and position of the first connecting ribs. This allows for more uniform distribution and more full heat exchange, improves the thermal management performance of the thermal management component, and enhances the strength of the thermal management component.

In some possible embodiments of the first aspect, a thickness D2 of the first connecting rib and the thickness D3 of the heat conducting plate satisfy 0.025≤D2/D3≤30. When D2/D3 is excessively small, the thickness D2 of the first connecting rib may be at a minimum value, while the thickness D3 of the heat conducting plate may be at a maximum value. In this case, the strength of the first connecting rib is low, the thickness of the heat conducting plate is large, and after the battery cell swells, the thermal management component is prone to irreversible deformation, affecting the performance of the thermal management component and the service life of the battery. Moreover, the weight of the thermal management component is large, affecting the weight energy density of the battery, so this ratio should not be excessively small. When D2/D3 is excessively large, D2 may be at a maximum value, while D3 may be at a minimum value. In this case, after the battery cell swells, although the thermal management performance of the thermal management component is less affected, the thermal management component is less likely to deform and is difficult to provide a sufficient space for the swelling of the battery cell, so this ratio should not be excessively large either.

In some possible embodiments of the first aspect, 0.075≤D2/D3≤15, so as to provide a swelling space for the battery cell while better balancing the thermal management performance and the weight energy density of the battery.

In some possible embodiments of the first aspect, the thickness D2 of the first connecting rib satisfies 0.1 mm≤D2≤4 mm. An excessively large thickness of the first connecting rib increases the difficulty of the flow channel in deformation when the battery cell swells, making it difficult to promptly provide a swelling space for the battery cell. Therefore, the thickness of the first connecting rib should not be set to be excessively large. Conversely, an excessively small thickness of the first connecting rib causes excessively low strength of the thermal management component, making it difficult to guarantee its thermal management performance after the battery cell swells. Therefore, the thickness of the first connecting rib should not be set to be excessively small either. When the thickness D2 of the first connecting rib satisfies 0.1 mm≤D2≤4 mm, the swelling space, the strength, and the thermal management performance can be balanced better.

In some possible embodiments of the first aspect, the thickness D3 of the heat conducting plate satisfies 0.1 mm≤D3≤4 mm. When the thickness of the heat conducting plate is excessively small, the thermal management component has insufficient strength, and is likely to deform after the battery cell swells and difficult to guarantee the thermal management performance. Therefore, the thickness of the heat conducting plate should not be set to be excessively small. When the thickness of the heat conducting plate is excessively large, the weight of the thermal management component increases, reducing the weight energy density of the battery. Therefore, the thickness of the heat conducting plate should not be set to be excessively large either. When the thickness D3 of the heat conducting plate satisfies 0.1 mm≤D3≤4 mm, the thermal management performance and the weight energy density of the battery can be balanced.

In some possible embodiments of the first aspect, the angle formed by the first connecting rib and the heat conducting plate satisfies 5°≤α≤90°. Through the above embodiments, better balance can be achieved for the requirement of providing a swelling space for the battery cell and the function of strengthening the thermal management component.

In some possible embodiments of the first aspect, 9°≤α≤72°. If the angle formed by the first connecting rib and the heat conducting plate is quite close to 90°, when the battery cell swells, the first connecting rib has large difficulty in deformation, and is less likely to deform promptly to provide a swelling space for the battery cell. If the angle formed by the first connecting rib and the heat conducting plate is excessively small, for example, less than 9°, it is difficult for the first connecting rib to strengthen the thermal management component well. Therefore, in the embodiments of this application, the angle formed by the first connecting rib and the heat conducting plate is limited, satisfying 9°≤α≤72°, such that when the battery cell swells, the first connecting rib can promptly deform in the first direction. This allows the thermal management component to promptly provide a swelling space for the battery cell and to provide a good strengthening function, thereby improving the performance of the battery.

In some possible embodiments of the first aspect, the first connecting rib is configured to be deformable when the battery cell swells, providing a swelling space for the battery cell. Through the above embodiments, a further swelling space can be provided for the battery cell, improving the performance of the battery.

In some possible embodiments of the first aspect, the size W of the flow channel in the first direction and the length L of the first connecting rib satisfy 0.086≤W/L≤1, and further satisfy 0.15≤W/L≤0.95, where the length L of the first connecting rib is a distance between connection points of the first connecting rib and the pair of heat conducting plates. Through the above embodiments, a swelling space can be provided for the battery cell while meeting the thermal management requirement.

In some possible embodiments of the first aspect, the connection points of the first connecting rib and the pair of heat conducting plates are each arranged as a rounded corner structure. This can reduce the possibility of severe deformation of the first connecting rib and limit the minimum size of the flow channel in the first direction when the thermal management component is compressed, thereby guaranteeing the thermal management performance.

In some possible embodiments of the first aspect, the thermal management component further includes a second connecting rib connected to one of the pair of heat conducting plates and spaced apart from the other of the pair of heat conducting plates, and the second connecting rib is disposed between the pair of heat conducting plates. This can limit the minimum size of the flow channel in the first direction when the thermal management component is compressed, thereby guaranteeing the thermal management performance.

In some possible embodiments of the first aspect, the second connecting rib is perpendicular to one of the pair of heat conducting plates. In this way, when the thermal management component is compressed, the second connecting rib is unlikely to deform, thereby limiting the minimum size of the flow channel in the first direction and improving the reliability of the thermal management component.

In some possible embodiments of the first aspect, the size D4 of the second connecting rib in the first direction and the size W of the flow channel in the first direction satisfy 0.3 mm≤D4≤(W-0.5) mm. When the size of the second connecting rib in the first direction is excessively large, the deformation of the connecting rib in the first direction is limited, making it difficult to provide a sufficient swelling space for the battery cell. Therefore, the size of the second connecting rib should not be excessively large. When the size of the second connecting rib in the first direction is excessively small, it is difficult to limit the minimum size of the flow channel, affecting the thermal management performance of the battery. Therefore, the size of the second connecting rib should not be excessively small. Therefore, the size of the second connecting rib in the first direction is limited, satisfying 0.3 mm≤D4≤(W-0.5) mm, such that the thermal management component can provide a sufficient swelling space for the battery cell while meeting the requirement of the thermal management performance of the battery.

In some possible embodiments of the first aspect, 0.5 mm≤D4≤(W-1) mm. When the size of the second connecting rib in the first direction is within the above range, the provision of a swelling space for the battery cell and the thermal management performance of the battery can be balanced better.

In some possible embodiments of the first aspect, the battery cell includes at least one first wall, and each first wall is connected to at least one thermal management component. Thus, effective thermal management can be performed on battery cells in different shapes, ensuring the performance of the battery.

In some possible embodiments of the first aspect, the battery cell includes two first walls opposite each other in the first direction and two second walls opposite each other in the second direction, where in the second direction, the second walls of two adjacent battery cells are opposite each other, and the second direction is perpendicular to the first direction. In this way, the two first walls with a large area are used to be connected to the thermal management component, helping to enhance the heat exchange between the battery cell and the thermal management component and guaranteeing the performance of the battery.

In some possible embodiments of the first aspect, the battery includes multiple battery cell groups and multiple thermal management components, and the multiple battery cell groups and the multiple thermal management components are alternately arranged in the first direction, where the battery cell group includes multiple battery cells arranged along the second direction, and the second direction is perpendicular to the first direction. In this way, the multiple battery cells and multiple thermal management components are interconnected to form a whole accommodated in the box, allowing for effective thermal management of each row of battery cells and enhancing the overall structural strength of the battery, thereby improving the performance of the battery.

According to a second aspect, an electric device is provided. The electric device includes the battery as described in the first aspect or any possible embodiment of the first aspect, and the battery is used to provide electrical energy to the electric device.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of a vehicle according to an embodiment of this application;
FIG. 2 is a schematic diagram of a battery according to an embodiment of this application;
FIG. 3 is a schematic diagram of a battery cell according to an embodiment of this application;
FIG. 4 is a schematic structural diagram of a battery according to an embodiment of this application;
FIG. 5 is a schematic structural exploded view of a battery according to an embodiment of this application;
FIG. 6 is a Y-Z plane view of a battery cell and a thermal management component according to an embodiment of this application;
FIG. 7 is a schematic sectional view along line A-A in FIG. 6;
FIG. 8 is a locally enlarged view of part B in FIG. 7;
FIG. 9 is a schematic structural diagram of a thermal management component according to an embodiment of this application;
FIG. 10 is a schematic sectional view of a thermal management component in an X-Z plane according to an embodiment of this application;
FIG. 11 is a locally enlarged view of part C in FIG. 10.
FIG. 12 is a schematic structural diagram of a row of battery cells and thermal management components on two sides thereof according to an embodiment of this application; and
FIG. 13 is a schematic structural exploded view of a row of battery cells and thermal management components on two sides thereof according to an embodiment of this application.

In the accompanying drawings, the figures are not necessarily drawn to scale.

### DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not strictly perpendicular, but within the allowable range of error. "Parallel" is not strictly parallel, but within the allowable range of error.

The orientation terms appearing in the following description all refer to directions shown in the figures, and do not limit the specific structure of this application. In the description of this application, it should also be noted that unless otherwise specified and defined explicitly, the terms "mounting", "connecting", and "joining" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations. The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylinder, flat, cuboid, or of other shapes. This is not limited in the embodiments of this application either. Battery cells are typically divided into three types by packaging method: cylindrical battery cell, prismatic battery cell, and pouch battery cell. This is not limited in the embodiments of this application either.

The battery mentioned in the embodiments of this application is a single physical module that includes one or more battery cells for providing a higher voltage and capacity. For example, the battery mentioned in this application may include a battery pack or the like. A battery typically includes a box configured to enclose one or more battery cells. The box can avoid the impact of a liquid or other foreign objects on the charge or discharge of the battery cell.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied to a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied to a surface of the negative electrode current collector. A current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (PP), polyethylene (PE), or the like. In addition, the electrode assembly may be a wound structure or a laminated structure. However, the embodiments of this application are not limited thereto.

To meet different power requirements, the battery may include multiple battery cells, and the multiple battery cells may be connected in series, parallel, or series-parallel, where being connected in series-parallel means a combination of series and parallel connections. Optionally, multiple battery cells may be connected in series, parallel, or series-parallel to form a battery module first, and then multiple battery modules are connected in series, parallel, or series-parallel to form a battery. In other words, the multiple battery cells may be directly combined into a battery, or may first be combined into battery modules that are then combined into a battery. The battery is further provided in an electric device to supply electrical energy to the electric device.

Reliability is one of the important factors to consider during design of a battery. The reliability of a battery is related to various performance aspects, such as compression resistance performance, impact resistance performance, and temperature performance. To ensure that the battery has good temperature performance, a thermal management component is typically disposed in the battery to perform thermal management on the battery, thereby keeping the battery temperature within an appropriate range. However, during the design of a thermal management component, in addition to the thermal management requirement, other factors need to be considered. For example, during use of the battery, the battery cell is likely to swell, and the swelling of the battery cell causes varying degrees of stress within the battery cell, impacting the capacity and reliability of the battery. The swelling of the battery cell includes reversible swelling and irreversible swelling. The reversible swelling results from structural swelling caused during intercalation and deintercalation of lithium ions and thermal swelling due to a thermal effect of the battery cell, while the irreversible swelling results from gas generation or irreversible structural phase change within the battery cell. Because the thermal management component is close to the battery cell, when the battery cell swells, the thermal management component must not only have thermal management performance but also alleviate the swelling of the battery cell, so as to reduce the possibility of stress concentration within the battery cell, thereby improving the reliability of the battery and prolonging the service life of the battery.

In view of this, embodiments of this application provide a battery, including a battery cell and a thermal management component. The thermal management component is opposite the battery cell along a first direction and connected to a first wall of the battery cell, the first wall is a wall with a largest surface area of the battery cell, the first direction is perpendicular to the first wall, the thermal management component includes a flow channel, and the flow channel is used for accommodating a heat exchange medium, so as to regulate a temperature of the battery cell. The flow channel is configured to provide a swelling space for the battery cell. The thermal management component includes a heat conducting plate, the heat conducting plate is thermally connected to the first wall to exchange heat with the battery cell, and the heat conducting plate is configured to be deformable to provide a swelling space for the battery cell.

In the embodiments of this application, the thermal management component is disposed in the battery and connected to the first wall with the largest surface area of the battery cell, where the thermal management component includes the flow channel, and the flow channel is used for accommodating a heat exchange medium, so as to regulate the temperature of the battery cell, and is configured to provide a swelling space for the battery cell. Disposing the flow channel for accommodating a heat exchange medium in the thermal management component can improve the thermal management performance of the thermal management component, enhancing the heat exchange effect between the battery cell and the thermal management component. Configuring the flow channel to be deformable when the battery cell swells provides a swelling space for the battery cell, which can reduce stress concentration within the battery cell when the battery cell swells, thereby improving the reliability and service life of the battery. As the thermal management component is connected to the wall with the largest surface area of the battery cell, the heat exchange area between the battery cell and the thermal management component can be increased as much as possible, thereby increasing the heat exchange amount and guaranteeing the performance of the thermal management component. In addition, when the battery cell swells, the thermal management component can provide it a sufficient swelling space. The heat conducting plate thermally connected to the first wall for heat exchange is deformable, allowing the thermal management component to deform to better adapt to the swelling of the battery cell. Therefore, the technical solutions of the embodiments of this application can improve the reliability and service life of the battery while guaranteeing thermal management within the battery, thereby improving the performance of the battery.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are not only applicable to the devices described above, but also applicable to all devices using batteries. However, for brevity of description, electric vehicles are used as an example for description in the following embodiments.

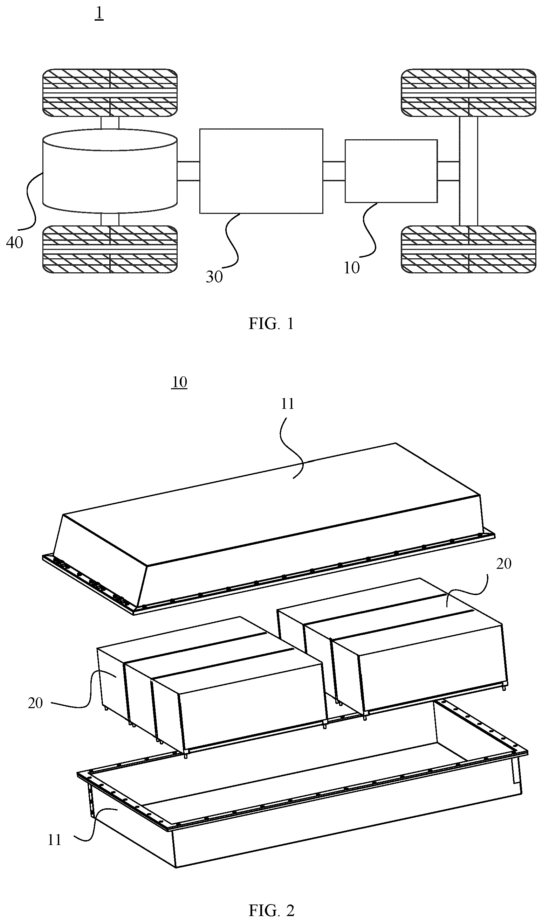

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided in the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different requirements for power use, the battery 10 may include multiple battery cells. For example, FIG. 2 is a schematic structural diagram of a battery 10 according to an embodiment of this application. The battery 10 may include multiple battery cells 20. The battery 10 may further include a box 11. Inside of the box 11 is a hollow structure. The multiple battery cells 20 are accommodated in the box 11. For example, the multiple battery cells 20 are connected in parallel or in series or in series-parallel, and then placed into the box 11.

Optionally, the battery 10 may further include other structures. Details are not described herein again. For example, the battery 10 may further include a busbar that is used to implement electrical connection between the multiple battery cells 20, for example, in a parallel, series, or series-parallel manner. Specifically, the busbar may implement the electrical connection between the battery cells 20 by connecting electrode terminals of the battery cells 20. Further, the busbar may be fixed to the electrode terminal of the battery cell 20 by welding. Electrical energy of the multiple battery cells 20 may be further led out by a conductive mechanism that passes through the box. Optionally, the conductive mechanism may also belong to the busbar.

Based on different power requirements, the number of the battery cells 20 may be set to any numerical value. The multiple battery cells 20 may be connected in series, parallel, or series-parallel to achieve large capacity or power. Because the number of battery cells 20 included in each battery 10 may be large, for ease of mounting, the battery cells 20 may be arranged in groups, and each group of battery cells 20 forms a battery module. The number of the battery cells 20 included in the battery module is not limited, and may be set based on requirements. A battery may include multiple battery modules. These battery modules may be connected in series, parallel, or series-parallel.

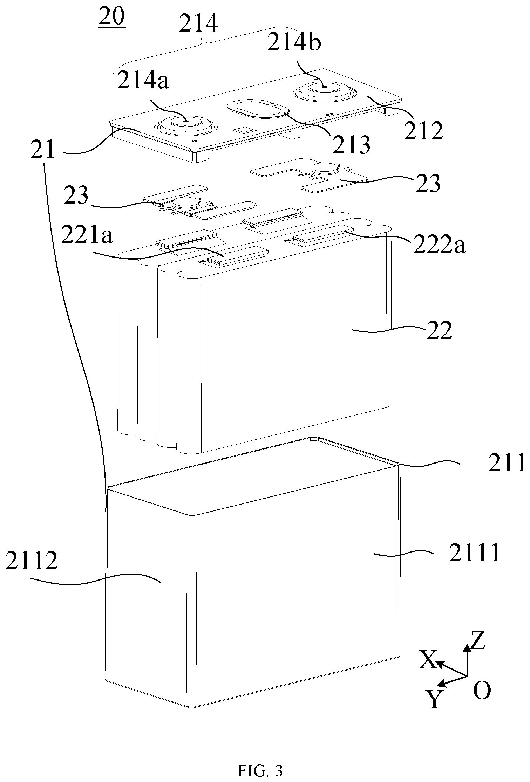

FIG. 3 is a schematic structural diagram of a battery cell 20 according to an embodiment of this application. As shown in FIG. 3, the battery cell 20 includes one or more electrode assemblies 22, a housing 211, and a cover plate 212. The housing 211 and the cover plate 212 form a shell or battery box 21. A wall of the housing 211 and the cover plate 212 are both referred to as walls of the battery cell 20. For a rectangular battery cell 20, the walls of the housing 211 include a bottom wall and four side walls. The housing 211 is determined based on a combined shape of the one or more electrode assemblies 22. For example, the housing 211 may be a hollow cuboid, a cube, or a cylinder, and one surface of the housing 211 has an opening for placing the one or more electrode assemblies 22 into the housing 211. For example, when the housing 211 is a hollow cuboid or cube, one plane of the housing 211 is an opening surface, which means that the plane has no wall such that the inside and the outside of the housing 211 are communicated. When the housing 211 is a hollow cylinder, an end surface of the housing 211 is an opening surface, which means that the end surface has no wall such that the inside and the outside of the housing 211 are communicated. The cover plate 212 covers the opening and is connected to the housing 211 to form an enclosed cavity for placing the electrode assemblies 22. The housing 211 is filled with an electrolyte, for example, a liquid electrolyte.

The battery cell 20 may also include two electrode terminals 214 that may be disposed on the cover plate 212. The cover plate 212 is typically in a shape of a flat plate, and the two electrode terminals 214 are fixed on a flat surface of the cover plate 212. The two electrode terminals 214 are a positive electrode terminal 214a and a negative electrode terminal 214b respectively. Each electrode terminal 214 is correspondingly provided with a connecting member 23 or a current collecting member that is located between the cover plate 212 and the electrode assembly 22 for electrically connecting the electrode assembly 22 and the electrode terminal 214.

As shown in FIG. 3, each electrode assembly 22 has a first tab 221a and a second tab 222a. The first tab 221a and the second tab 222a have opposite polarities. For example, when the first tab 221a is a positive tab, and the second tab 222a is a negative tab. The first tabs 221a of the one or more electrode assemblies 22 are connected to one electrode terminal through one connecting member 23, and the second tabs 222a of the one or more electrode assemblies 22 are connected to the other electrode terminal through the other connecting member 23. For example, the positive electrode terminal 214a is connected to the positive tab through one connecting member 23, and the negative electrode terminal 214b is connected to the negative tab through the other connecting member 23.

In the battery cell 20, one or more electrode assemblies 22 may be provided based on actual use requirements. As shown in FIG. 3, the battery cell 20 is provided with four independent electrode assemblies 22.

A pressure relief mechanism 213 may also be provided on the battery cell 20. The pressure relief mechanism 213 is configured to be actuated when internal pressure or temperature of the battery cell 20 reaches a threshold, so as to relieve the internal pressure or temperature.

The pressure relief mechanism 213 may be various possible pressure relief structures. This is not limited in the embodiments of this application. For example, the pressure relief mechanism 213 may be a temperature-sensitive pressure relief mechanism, and the temperature-sensitive pressure relief mechanism is configured to melt when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to break when the internal pressure of the battery cell 20 provided with the pressure relief mechanism 213 reaches a threshold.

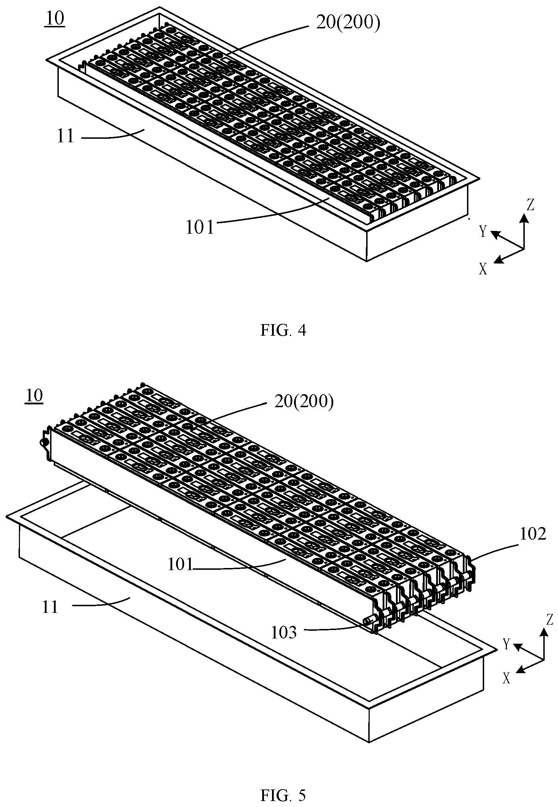

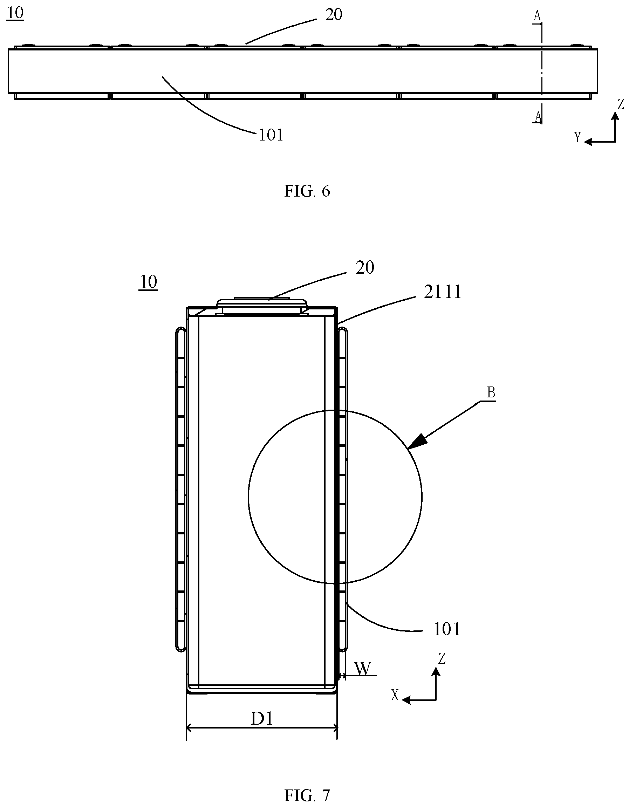

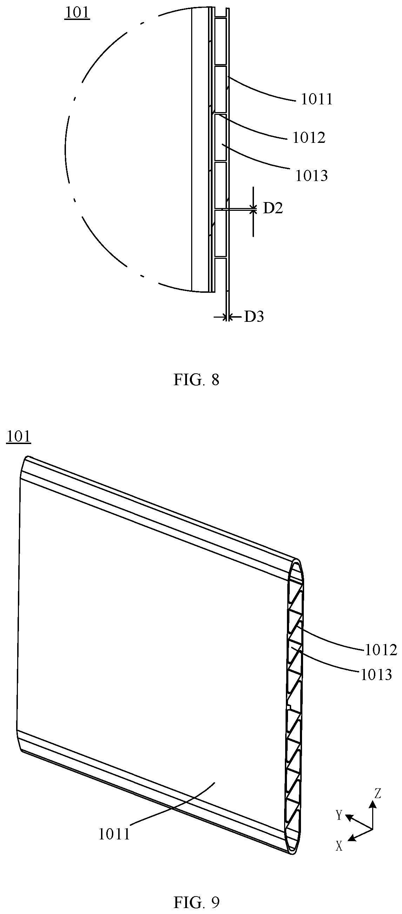

FIG. 4 is a schematic structural diagram of the battery 10 according to an embodiment of this application, FIG. 5 is a schematic structural exploded view of the battery 10 according to an embodiment of this application, FIG. 6 is a Y-Z plane view of the battery cell 20 and a thermal management component 101 according to an embodiment of this application, FIG. 7 is a schematic sectional view along line A-A in FIG. 6, and FIG. 8 is a locally enlarged view of part B in FIG. 7.

As shown in FIGs. 4 to 6, the battery 10 includes a battery cell 20 and a thermal management component 101, where the thermal management component 101 is opposite the battery cell 20 along a first direction X and connected to a first wall 2111 of the battery cell 20, the first wall 2111 is a wall with a largest surface area of the battery cell 20, and the first direction X is perpendicular to the first wall 2111. As shown in FIGs. 7 to 8, the thermal management component 101 includes a flow channel 1013, and the flow channel 1013 is used for accommodating a heat exchange medium, so as to regulate the temperature of the battery cell. The flow channel 1013 is configured to provide a swelling space for the battery cell 20. The thermal management component 101 includes a heat conducting plate 1011, and the heat conducting plate 1011 is thermally connected to the first wall 2111 to exchange heat with the battery cell 20. The heat conducting plate 1011 is configured to be deformable to provide a swelling space for the battery cell 20.

The first direction X is a direction in which the battery cell 20 and the thermal management component 101 are arranged in the battery 10, meaning that in the battery 10, the battery cell 20 and the thermal management component 101 are arranged along the first direction X. The battery 10 includes multiple battery cells 20 and multiple thermal management components 101 arranged along the first direction X. In the battery 10, the number of battery cells 20 and the number of thermal management components 101 may be set based on parameters such as the sizes of the battery 10 and the battery cell 20. This is not limited in this application.

The thermal management component 101 is used for accommodating a heat exchange medium, so as to regulate the temperature of multiple battery cells 20. The flow channel 1013 refers to a passage through which the heat exchange medium flows in the thermal management component 101. Reasonably arranging the structure of the flow channel 1013 can improve the heat exchange performance of the thermal management component 101. The heat exchange medium in the thermal management component 101 may be a liquid or gas, such as water, air, or a mixture of water and ethylene glycol. It may also be some solid-liquid phase change materials, such as molten salt, paraffin, or acetic acid. Regulating the temperature refers to heating or cooling the multiple battery cells 20. In a case of cooling the battery cells 20, the flow channel 1013 can accommodate a cooling medium, so as to regulate the temperature of the multiple battery cells 20. In this case, the thermal management component 101 may also be referred to as a cooling component or cooling plate, and the accommodated heat exchange medium may also be referred to as a cooling medium or cooling heat-exchange medium, more specifically a cooling liquid or cooling gas. Additionally, the thermal management component 101 may also be configured for heating. This is not limited in the embodiments of this application. Optionally, the heat exchange medium may be circulated to achieve a better temperature regulation effect. Optionally, as shown in FIG. 5, the thermal management component 101 is provided with a collector 102 and a pipeline 103 at two ends in the second direction Y, where the pipeline 103 is configured for transporting the heat exchange medium, and the collector 102 is configured to collect flow of the heat exchange medium.

During operation, the battery cell may swell for various reasons. Swelling of the battery cell is usually classified into reversible swelling and irreversible swelling, which is usually related to the type of battery. For example, during a first charge-discharge cycle of a lithium-ion battery, an electrolyte undergoes a reduction reaction with graphite particles at a solid-liquid interface, forming a passivation layer covering a surface of an electrode material, and the generation of the passivation layer causes the swelling of the battery cell. In another example, during the cycling of a battery electrode plate, when the metal ions intercalate into the electrode plate, the volume of the battery cell increases, and when the metal ions de-intercalate, the volume of the battery cell decreases. Such swelling typically belongs to reversible swelling. In still another example, gas is generated during the oxidative decomposition of the electrolyte and accumulates in the battery cell, which also causes the swelling of the battery cell. Such swelling typically belongs to irreversible swelling. To guarantee the energy density and thermal management effect of the battery, the battery cells and the thermal management components are usually arranged closely in the box of the battery. When the battery cells and the thermal management components are assembled into a battery, a certain pressure is applied to make the internal structure of the battery compacted. Therefore, when the battery is assembled and the battery cells swell, the thermal management components are all squeezed. The thermal management component, if having insufficient strength, is likely to deform under stress, affecting the assembly efficiency of the battery. The thermal management component, if having excessively high strength, is difficult to deform and does not provide a swelling space for the battery cell when the battery cell swells, which may lead to stress accumulation in the battery cell, affecting the reliability of the battery. Therefore, in the embodiments of this application, the flow channel 1013 is configured to be capable of providing a swelling space for the battery cell. Specifically, when the battery cell 20 swells, the flow channel 1013 is subjected to the force from the battery cell 20 and can deform in the first direction X, thereby providing a swelling space for the battery cell 20. The deformation of the flow channel 1013 may mean that the thermal management component 101 deforms after bearing the action force from the battery cell 20 during the swelling, causing the flow channel 1013 to be compressed in the first direction X. Optionally, the deformation may be elastic, such that when the battery cell 20 undergoes reversible swelling, the flow channel 1013 can return to its original size after the volume of the battery cell 20 decreases, allowing the thermal management component 101 to more fully exert its thermal management performance. In addition, when the battery cell 20 swells again, the thermal management component 101 can deform again, such that the thermal management component 101 improves the reliability of the battery during the process of multiple reversible swellings of the battery cell 20, helping to prolong the service life of the battery.

The thermal management component 101 includes a heat conducting plate 1011, and the heat conducting plate 1011 is thermally connected to the first wall 2111 to exchange heat with the battery cell 20. The heat conducting plate 1011 may be made of a metal material such as aluminum or steel, or the heat conducting plate 1011 may be made of other non-metal materials with good thermal conductivity. The heat conducting plate 1011 may be in direct contact with the first wall 2111 to exchange heat with the battery cell 20, or the heat conducting plate 1011 may be connected to the first wall 2111 using a thermal pad, a thermal adhesive, or the like, to exchange heat with the battery cell 20.

The heat conducting plate 1011 is configured to be deformable to provide a swelling space for the battery cell 20. Specifically, when the battery cell 20 swells, the heat conducting plate 1011 is subjected to the force from the battery cell 20 and compressed in the first direction X to deform, thereby providing a swelling space for the battery cell 20. Optionally, the deformation may be elastic deformation or non-elastic deformation. This allows the thermal management component 101 to better adapt to the swelling of the battery cell 20, helping to reduce stress concentration within the battery cell 20, thereby improving the performance of the battery 10.

Therefore, in the embodiments of this application, disposing the flow channel 1013 for accommodating the heat exchange medium in the thermal management component 101 can improve the thermal management performance of the thermal management component 101. Reasonably disposing the flow channel 1013 can enhance the heat exchange effect between the battery cell 20 and the thermal management component 101. Configuring the flow channel 1013 to be capable of providing a swelling space for the battery cell 20 can reduce stress concentration within the battery cell 20 when the battery cell 20 swells, thereby improving the reliability and service life of the battery 10. As the thermal management component 101 is connected to the wall with the largest surface area of the battery cell 20, the heat exchange area between the battery cell 20 and the thermal management component 101 can be increased as much as possible, thereby increasing the heat exchange amount and guaranteeing the performance of the thermal management component 101. In addition, when the battery cell 20 swells, the thermal management component 101 can provide it a more sufficient swelling space. The heat conducting plate 1011 thermally connected to the first wall 2111 for heat exchange is deformable, allowing the thermal management component 101 to deform to better adapt to the swelling of the battery cell 20. Therefore, the technical solutions of the embodiments of this application can improve the reliability and service life of the battery 10 while guaranteeing thermal management within the battery 10, thereby improving the performance of the battery 10.

Optionally, the size W of the flow channel 1013 in the first direction X and the size D1 of the battery cell 20 in the first direction X satisfy 0.0025≤W/D1≤1, and further satisfy 0.01≤W/D1≤0.8. When W/D1 is excessively large, the size W of the flow channel 1013 in the first direction X may be at a maximum value, while the size D1 of the battery cell 20 may be at a minimum value. In this case, although the flow channel can provide a sufficient swelling space for the battery cell 20, the volumetric energy density of the battery 10 is reduced, so this ratio should not be set to be excessively large. When this ratio is excessively small, the size W of the flow channel 1013 in the first direction X may be at a minimum value, while the size D1 of the battery cell 20 in the first direction X may be at a maximum value. In this case, although the volumetric energy density of the battery 10 is large, the flow channel 1013 cannot provide a sufficient swelling space for the battery cell 20, and it is also difficult to meet the thermal management requirement well, so this ratio should not be excessively small either. When 0.0025≤W/D1≤1, a large swelling space can be provided for the battery cell 20 while the volumetric energy density and the thermal management requirement can be balanced. When 0.01≤W/D1≤0.8, the performance of the battery can be further improved.

After multiple charge-discharge cycles, the capacity of the battery cell decays. Usually, when the capacity of the battery cell decays to about 80% of its original capacity, its performance significantly declines. In this case, the battery cell should be maintained or replaced. Therefore, after a specific number of charge-discharge cycles, the capacity decay degree of the battery cell can be tested, to evaluate the service life of the battery cell. Table 1 shows test data of capacity decay degrees and volumetric grouping efficiencies of batteries after 1000 charge-discharge cycles of battery cells in a case of different values of ratios W/D1 of sizes of flow channels 1013 in the first direction X to sizes of the battery cells 20 in the first direction X in examples and comparative examples of this application, where Q represents a percentage of a decayed capacity of the battery cell in an original capacity of the battery cell, and η represents the volumetric grouping efficiency of the battery, which is a percentage of a total volume of all the battery cells contained in the battery in a volume of the battery. According to Examples 1-18 in Table 1, it can be known that the capacity decay of all the battery cells is less than 20%. It can be seen that when 0.0025≤W/D1≤1, the capacity of the battery cell is more than 80% of the original capacity after 1000 charge-discharge cycles. In other words, when 0.0025≤W/D1≤1, the service life of the battery cell is not less than 1000 charge-discharge cycles. According to Examples 3-16, it can be known that the capacity decay of the battery cell is less than 15%. It can be seen that when W/D1 satisfies 0.01≤W/D1≤0.8, the capacity decay of the battery cell is smaller after the same number of charge-discharge cycles, and the volumetric grouping efficiencies of the batteries are all greater than 50%, indicating a high volumetric energy density of the battery. According to Comparative example 1, it can be known that when the value of W/D1 is less than 0.0025, for example, 0.0023, the capacity decay of the battery cell is greater than 20%, indicating a short service life of the battery cell. According to Comparative example 2, when the value of W/D1 is greater than 1, for example, 1.2, although the capacity decay of the battery cell is less than 20%, the volumetric grouping efficiency of the battery is less than 40%, indicating a low volumetric energy density of the battery. Therefore, setting 0.0025≤W/D1≤1, and further setting 0.01≤W/D1≤0.8, help to improve the performance of the battery.

**Table 1**

| | Size W of flow channel (measured in mm) | Size D1 of battery cell (measured in mm) | W/D1 | Capacity decay (Q) | Volumetric grouping efficiency η |
|---|---|---|---|---|---|
| Comparative example 1 | 0.2 | 88 | 0.0023 | 25.3% | 74.80% |
| Example 1 | 0.2 | 80 | 0.0025 | 18.5% | 72.00% |
| Example 2 | 0.8 | 88 | 0.0091 | 17.0% | 70.40% |
| Example 3 | 0.8 | 80 | 0.01 | 14.5% | 72.00% |
| Example 4 | 0.8 | 66.5 | 0.012 | 14.2% | 73.15% |
| Example 5 | 0.8 | 33.2 | 0.0241 | 13.7% | 73.04% |
| Example 6 | 2 | 79 | 0.0253 | 13.5% | 71.10% |
| Example 7 | 2 | 66.5 | 0.0301 | 13.0% | 69.83% |
| Example 8 | 3 | 88 | 0.0341 | 12.5% | 70.40% |
| Example 9 | 3 | 70 | 0.0429 | 12.2% | 70.00% |
| Example 10 | 0.8 | 12.5 | 0.064 | 11.3% | 70.00% |
| Example 11 | 6 | 88 | 0.0682 | 12.4% | 66.00% |
| Example 12 | 2 | 28.5 | 0.0702 | 11.1% | 69.83% |
| Example 13 | 10 | 88 | 0.1136 | 11.6% | 66.00% |
| Example 14 | 3 | 12.5 | 0.24 | 10.9% | 60.00% |
| Example 15 | 8 | 12.5 | 0.64 | 11.3% | 51.63% |
| Example 16 | 10 | 12.5 | 0.8 | 10.2% | 50.25% |
| Example 17 | 10 | 11 | 0.91 | 12.8% | 47.05% |
| Example 18 | 10 | 10 | 1 | 12.5% | 40.50% |
| Comparative example 2 | 15 | 12.5 | 1.2 | 13.4% | 33.75% |

Optionally, the size W of the flow channel 1013 in the first direction X satisfies 0.2 mm≤W≤10 mm. When W is excessively large, the size of the thermal management component 101 also correspondingly increases. In this case, the thermal management component 101 can meet the thermal management requirement well, but a reduced volumetric energy density of the battery is caused. In addition, the thermal management component 101 is excessively likely to deform, affecting the strength of the thermal management component 101, so the value of W should not be excessively large. When W is excessively small, it is difficult to provide a sufficient swelling space for the battery cell 20, and the thermal management performance of the thermal management component 101 is also affected, so the value of W should not be excessively small either. When the size W of the flow channel 1013 in the first direction X satisfies 0.2 mm≤W≤10 mm, a sufficient swelling space can be provided for the battery cell 20, while the thermal management performance of the thermal management component 101 and the volumetric energy density of the battery 10 can be balanced.

Optionally, as shown in FIG. 8, in some embodiments of this application, the thermal management component 101 includes a pair of heat conducting plates 1011 opposite each other along the first direction X and a first connecting rib 1012 connecting the pair of heat conducting plates 1011, the first connecting rib 1012 and the pair of heat conducting plates 1011 form the flow channel 1013, and one of the pair of heat conducting plates 1011 is thermally connected to the first wall 2111, so as to exchange heat with the battery cell 20. In the embodiments of this application, as the first connecting rib 1012 and the heat conducting plates 1011 are arranged to form the flow channel 1013, the distribution of the heat exchange medium in the thermal management component 101 can be adjusted by changing the number and position of the first connecting ribs 1012. This allows for more uniform distribution and more full heat exchange, improves the thermal management performance of the thermal management component 101, and enhances the strength of the thermal management component 101.

Optionally, in some embodiments of this application, a thickness D2 of the first connecting rib 1012 and a thickness D3 of the heat conducting plate 1011 satisfy 0.025≤D2/D3≤30, and further satisfy 0.075≤D2/D3≤15. When D2/D3 is excessively small, the thickness D2 of the first connecting rib 1012 may be at a minimum value, while the thickness D3 of the heat conducting plate 1011 may be at a maximum value. In this case, the strength of the first connecting rib 1012 is low, the thickness of the heat conducting plate 1011 is large, and after the battery cell 20 swells, the thermal management component 101 is prone to irreversible deformation, affecting the performance of the thermal management component 101 and the service life of the battery 10. Moreover, the weight of the thermal management component 101 is large, affecting the weight energy density of the battery 10, so this ratio should not be excessively small. When D2/D3 is excessively large, D2 may be at a maximum value, while D3 may be at a minimum value. In this case, after the battery cell 20 swells, although the thermal management performance of the thermal management component 101 is less affected, the thermal management component 101 is less likely to deform and is difficult to provide a sufficient space for the swelling of the battery cell 20, so this ratio should not be excessively large either.

Optionally, in some embodiments of this application, the thickness D2 of the first connecting rib 1012 satisfies 0.1 mm≤D2≤4 mm. When the thickness of the first connecting rib 1012 is excessively large, the first connecting rib 1012 is unlikely to deform when the battery cell 20 swells, and difficult to promptly provide a swelling space for the battery cell 20. An excessively small thickness of the first connecting rib 1012 results in excessively low strength of the thermal management component 101, reducing its reliability. Therefore, in the embodiments of this application, the thickness D2 of the first connecting rib 1012 is set within the range of 0.1 mm≤D2≤4 mm, so as to balance the swelling space, the strength, and the thermal management requirement.

Optionally, in some possible embodiments of this application, the thickness D3 of the heat conducting plate 1011 satisfies 0.1 mm≤D3≤4 mm. When the thickness of the heat conducting plate 1011 is excessively small, the thermal management component 101 has insufficient strength, and is likely to deform after the battery cell 20 swells and difficult to guarantee the thermal management performance. Therefore, the thickness of the heat conducting plate 1011 should not be set to be excessively small. When the thickness of the heat conducting plate 1011 is excessively large, the weight of the thermal management component 101 increases, reducing the weight energy density of the battery 10. Therefore, the thickness of the heat conducting plate 1011 should not be set to be excessively large either. When the thickness D3 of the heat conducting plate 1011 satisfies 0.1 mm≤D3≤4 mm, the thermal management performance and the weight energy density of the battery 10 can be balanced.

Table 2 shows test data of capacity decay degrees of battery cells 20 after 1000 charge-discharge cycles in a case of different values of ratios of thicknesses D2 of first connecting ribs 1012 to thicknesses D3 of heat conducting plates 1011 in examples and comparative examples of this application, where Q represents a percentage of the decayed capacity of the battery cell 20 in the original capacity of the battery cell. According to Examples 19-28 in Table 2, it can be known that when 0.025≤D2/D3≤30, the capacity decay of all the battery cells 20 is less than 20%. Further, according to Examples 21-26, it can be known that when 0.075≤D2/D3≤15, the capacity decay of all the battery cells 20 is less than 15%. According to Comparative examples 3 and 4, it can be known that when D2/D3<0.025 or D2/D3>30, the capacity decay of the battery cells 20 is greater than 20%. Thus, to better meet the requirements of the thermal management and swelling space of the battery cell 20 for prolonging the service life of the battery cell 20, the ratio of the thickness D2 of the first connecting rib 1012 to the thickness D3 of the heat conducting plate 1011 is set within the range of 0.025≤D2/D3≤30, further within the range of 0.075≤D2/D3≤15.

**Table 2**

| | Thickness D2 of first connecting rib (measured in mm) | Thickness D3 of heat conducting plate (measured in mm) | D2/D3 | Capacity decay (Q) |
|---|---|---|---|---|
| Comparative example 3 | 0.1 | 6 | 0.0167 | 23% |
| Example 19 | 0.1 | 4 | 0.025 | 19.5% |
| Example 20 | 0.15 | 4 | 0.0375 | 18.7% |
| Example 21 | 0.3 | 4 | 0.075 | 14.2% |
| Example 22 | 0.1 | 0.35 | 0.2857 | 13.2% |
| Example 23 | 0.3 | 0.35 | 0.8571 | 10.3% |
| Example 24 | 0.3 | 0.3 | 1 | 11.0% |
| Example 25 | 4 | 0.35 | 11.4286 | 13.6% |
| Example 26 | 3 | 0.2 | 15 | 14.0% |
| Example 27 | 4 | 0.15 | 26.6667 | 19.0% |
| Example 28 | 3 | 0.1 | 30 | 18.3% |
| Comparative example 4 | 4 | 0.1 | 40 | 26.0% |

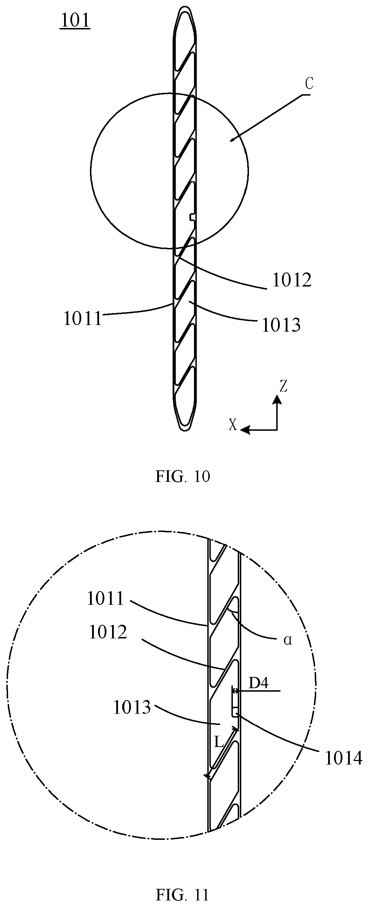

FIG. 9 is a schematic structural diagram of the thermal management component 101 according to an embodiment of this application, FIG. 10 is a schematic sectional view of the thermal management component 101 in an X-Z plane according to an embodiment of this application, and FIG. 11 is a locally enlarged view of part C in FIG. 10.

Optionally, in the embodiments of this application, the angle formed by the first connecting rib 1012 and the heat conducting plate 1011 satisfies 5°≤α≤90°. The angle formed by the first connecting rib 1012 and the heat conducting plate 1011 refers to an acute or right angle formed therebetween. To guarantee the performance of the battery 10, it is necessary to balance requirements of strength, deformation, and thermal management performance of the thermal management component 101. In the embodiments of this application, when the angle formed by the first connecting rib 1012 and the heat conducting plate 1011 satisfies 5°≤α≤90°, requirements of strength, deformation, and thermal management performance can be balanced. Optionally, the angle α may be 5°, 10°, 15°, 20°, 25°, 30°, 35°, 40°, 45°, 50°, 55°, 60°, 65°, 70°, 75°, 80°, 85°, or 90°.

Optionally, in the embodiments of this application, the angle formed by the first connecting rib 1012 and the heat conducting plate 1011 satisfies 9°≤α≤72°. Specifically, if the angle formed by the first connecting rib 1012 and the heat conducting plate 1011 is large, for example, equal to or close to 90°, the difficulty for the first connecting rib 1012 to deform correspondingly increases when the battery cell 20 swells. The angle closer to 90° indicates the deformation of the first connecting rib 1012 increasingly depends on the properties of its own material. In other words, if the first connecting rib 1012 is perpendicular to the heat conducting plate 1011, to provide a swelling space for the battery cell 20 through the deformation of the first connecting rib 1012, the first connecting rib 1012 itself needs to have high elasticity; otherwise, it is difficult to meet the requirement of timely deformation to provide a swelling space for the battery cell 20. However, the first connecting rib 1012, if having excessively large elasticity, is excessively likely to deform, which may lead to insufficient strength of the thermal management component 101 and other issues. Therefore, the angle between the first connecting rib 1012 and the heat conducting plate 1011 should not be set to be excessively large. Conversely, if the angle formed by the first connecting rib 1012 and the heat conducting plate 1011 is excessively small, when the length of the first connecting rib 1012 is specified, in a case of a smaller angle, the gap between the pair of heat conducting plates 1011 decreases correspondingly. As a result, the space for accommodating the heat exchange medium decreases correspondingly, which is likely to affect the thermal management performance, and the swelling space that can be provided for the battery cell 20 is also limited. Additionally, when the gap between the pair of heat conducting plates 1011 is specified, in a case of a smaller angle, the length of the first connecting rib 1012 is increasingly large. This increases the weight of the thermal management component 101, thus increasing the overall weight of the battery 10, and also causes an insufficient space of the thermal management component 101 for accommodating the heat exchange medium, affecting its thermal management performance. Therefore, the angle between the first connecting rib and the heat conducting plate 1011 should not be set excessively small. Therefore, in the embodiments of this application, the angle between the first connecting rib and the heat conducting plate is limited, satisfying 9°≤α≤72°, such that when the battery cell swells, the first connecting rib 1012 can promptly deform in the first direction X. This allows the thermal management component 101 to promptly provide a swelling space for the battery cell 20 and to provide a good strengthening function, thereby improving the performance of the battery.

Optionally, in some embodiments of this application, the first connecting rib 1012 is configured to be deformable to provide a swelling space for the battery cell 20. Specifically, when the battery cell 20 swells, the first connecting rib 1012 disposed between the pair of heat conducting plates 1011 can deform, such that the thermal management component 101 can further provide a swelling space for the battery cell 20, improving the performance of the battery.

Optionally, in some embodiments of this application, the size W of the flow channel 1013 in the first direction X and the length L of the first connecting rib satisfy 0.086≤W/L≤1, and further satisfy 0.15≤W/L≤0.95, so as to balance the swelling space, the strength, and the thermal management requirement. The length L of the first connecting rib 1012 is a distance between connection points of the first connecting rib 1012 and the pair of heat conducting plates 1011. When a ratio of the size W of the flow channel 1013 in the first direction X to the length L of the first connecting rib 1012 is excessively large, the size W of the flow channel 1013 in the first direction X may be at its maximum value, while the length L of the first connecting rib 1012 may be at its minimum value. Although the flow channel 1013 has a large space, the first connecting rib 1012 has a limited deformable degree and cannot provide a sufficient swelling space for the battery cell 20, so this ratio should not be excessively large. When the ratio of the size W of the flow channel 1013 in the first direction X to the length L of the first connecting rib is excessively small, the size W of the flow channel 1013 in the first direction X may be at its minimum value, while the length L of the first connecting rib 1012 may be at its maximum value. Although the first connecting rib 1012 can deform to a large extent, the flow channel 1013 has a small size and is difficult to provide a sufficient swelling space for the battery cell 20 when the thermal management component 101 is compressed. In addition, the excessively small size of the flow channel 1013 also affects the thermal management performance of the thermal management component 101, so this ratio should not be excessively small. Therefore, when the size W of the flow channel 1013 in the first direction X and the length L of the first connecting rib 1012 satisfy 0.086≤W/L≤1, a sufficient swelling space can be provided for the battery cell 20 and the thermal management requirement of the battery 10 can be met, thereby improving the reliability of the battery 10. When the ratio satisfies 0.15≤W/L≤0.95, the swelling space, the reliability, and the thermal management requirement can be better balanced.

Table 3 shows test data of capacity decay degrees of battery cells after 1000 charge-discharge cycles in a case of different ratios of sizes W of flow channels 1013 in the first direction X to lengths L of first connecting ribs 1012 in examples and comparative examples of this application, where Q represents a percentage of the decayed capacity of the battery cell 20 in the original capacity of the battery cell. According to Examples 29-40 in Table 3, it can be known that when 0.086≤W/L≤1, the capacity decay of all the battery cells 20 is less than 20%. Further, according to Examples 31-39, it can be known that when 0.15≤W/L≤0.95, the capacity decay of all the battery cells 20 is less than 15%. According to Comparative example 5, it can be known that when W/L<0.086, the capacity decay of the battery cell 20 is greater than 20%. It can be seen that when 0.086≤W/L≤1, the capacity decay of the battery cell 20 after 1000 charge-discharge cycles allows the service life requirement of the battery cell 20 to be met. When 0.15≤W/L≤0.95, the capacity decay of the battery cell 20 after a same number of charge-discharge cycles is smaller, and the service life of the battery cell 20 is longer. Therefore, the ratio of the size W of the flow channel 1013 in the first direction X to the length L of the first connecting rib is set within the range of 0.086≤W/L≤1, more specifically within the range of 0.15≤W/L≤0.95, helping to prolong the service life of the battery cell 20 and improve the performance of the battery cell 20.

**Table 3**

| | Size W of flow channel (measured in mm) | Length L of first connecting rib (measured in mm) | W/L | Capacity decay (Q) |
|---|---|---|---|---|
| Comparative example 5 | 0.6 | 10 | 0.06 | 23% |
| Example 29 | 0.86 | 10 | 0.086 | 18.9% |
| Example 30 | 0.8 | 7 | 0.114 | 17.8% |
| Example 31 | 3 | 20 | 0.15 | 14.2% |
| Example 32 | 2 | 6 | 0.333 | 13.9% |
| Example 33 | 2 | 5.5 | 0.364 | 13.6% |
| Example 34 | 2 | 4 | 0.5 | 12.5% |
| Example 35 | 0.8 | 1.5 | 0.533 | 10.8% |
| Example 36 | 3 | 5.5 | 0.545 | 12.0% |
| Example 37 | 6 | 10 | 0.6 | 13.2% |
| Example 38 | 4.5 | 7 | 0.643 | 14.5% |
| Example 39 | 9.5 | 10 | 0.95 | 14.7% |
| Example 40 | 6 | 6 | 1 | 19.2% |

Optionally, as shown in FIG. 11, in some embodiments of this application, the connection points of the first connecting rib 1012 and the pair of heat conducting plates 1011 are each arranged as a rounded corner structure. Arranging the connection points of the first connecting rib 1012 and the heat conducting plate 1011 as the rounded corner structures can limit the deformation degree of the first connecting rib 1012 when the battery cell 20 swells, and reduce the possibility of stress concentration within the battery cell, thereby enhancing the structural strength.

Optionally, as shown in FIG. 11, in some embodiments of this application, the thermal management component 101 further includes a second connecting rib 1014 connected to one of the pair of heat conducting plates 1011 and spaced apart from the other of the pair of heat conducting plates 1011, and the second connecting rib 1014 is disposed between the pair of heat conducting plates 1011. Optionally, the second connecting rib 1014 is spaced apart from the first connecting rib 1012. The second connecting rib 1014 refers to a rib arranged on wall surfaces opposite the pair of heat conducting plates 1011. Unlike the first connecting rib 1012 with two ends respectively connected to the pair of heat conducting plates 1011, the second connecting rib 1014 has one end connected to one of the heat conducting plates 1011 and the other end not connected to the heat conducting plate 1011. When the battery cell swells, the first connecting rib 1012 deforms under force, causing the pair of heat conducting plates 1011 to approach each other, thus providing a swelling space for the battery cell. When the first connecting rib 1012 deforms to a certain extent, or the distance between the pair of heat conducting plates 1011 is reduced to a certain extent, the first connecting rib 1012 or the heat conducting plate 1011 not connected to the second connecting rib abuts against an end of the second connecting rib 1014. This allows the second connecting rib 1014 to prevent the heat conducting plate 1011 not connected to the second connecting rib 1014 or the first connecting rib 1012 from continuously deforming, limiting the minimum gap between the pair of heat conducting plates 1011 of the thermal management component 101, thereby guaranteeing the thermal management performance while providing a swelling space for the battery cell 20.

Optionally, as shown in FIG. 11, in some embodiments of this application, the second connecting rib 1014 is perpendicular to one of the pair of heat conducting plates 1011. In this way, the second connecting rib 1014 is unlikely to deform, which is more conducive to limiting the minimum size of the flow channel 1013. Optionally, the second connecting rib 1014 and the heat conducting plate 1011 or the first connecting rib 1012 may be made of the same or different materials. There may be one or more second connecting ribs 1014. Of the pair of heat conducting plates 1011, one heat conducting plate 1011 may be provided with a second connecting rib 1014, or both heat conducting plates 1011 may be provided with the second connecting rib 1014. This is not limited in this application.

The sizes of the second connecting rib 1014 and the flow channel 1013 in the first direction X determine the deformation degree of the first connecting rib 1012. When the size of the second connecting rib 1014 in the first direction X is excessively large, the deformation of the first connecting rib 1012 or the heat conducting plate 1011 in the first direction X is limited, making it difficult to provide a sufficient swelling space for the battery cell 20. Therefore, the size of the second connecting rib 1014 should not be excessively large. When the size of the second connecting rib 1014 in the first direction X is excessively small, it is difficult to limit the minimum size of the flow channel 1013, affecting the thermal management performance of the battery. Therefore, the size of the second connecting rib 1014 should not be excessively small. Therefore, to allow the thermal management component 101 to provide a sufficient swelling space for the battery cell 20 while also meeting the thermal management requirement of the battery 10, in the embodiments of this application, the size D4 of the second connecting rib 1014 in the first direction X and the size W of the flow channel 1013 in the first direction X satisfy 0.3 mm≤D4≤(W-0.5) mm, and further satisfy 0.5 mm≤D4≤(W-1) mm. This can balance the provision of a sufficient swelling space of the battery cell 20 and the thermal management requirement of the battery 10.

Optionally, in the embodiments of this application, the battery cell 20 includes at least one first wall, and each first wall is connected to at least one thermal management component 101. Specifically, the number of first walls and the number of thermal management components 101 are related to the shape of the battery cell 20. The battery cell 20 may be a cuboid as shown in FIGs. 4 to 7 or may be a cylinder or of other shapes. The shape of the battery cell 20 is not limited in this application. When the battery cell 20 is a cuboid, the battery cell 20 includes two first walls, and the two first walls are each connected to at least one thermal management component 101. When the battery cell is a cylinder, the cylindrical surface of the battery cell may be regarded as the first wall. In this case, thermal management components may be respectively arranged at two ends of the battery cell along the first direction X, and the two thermal management components are connected to the same first wall.

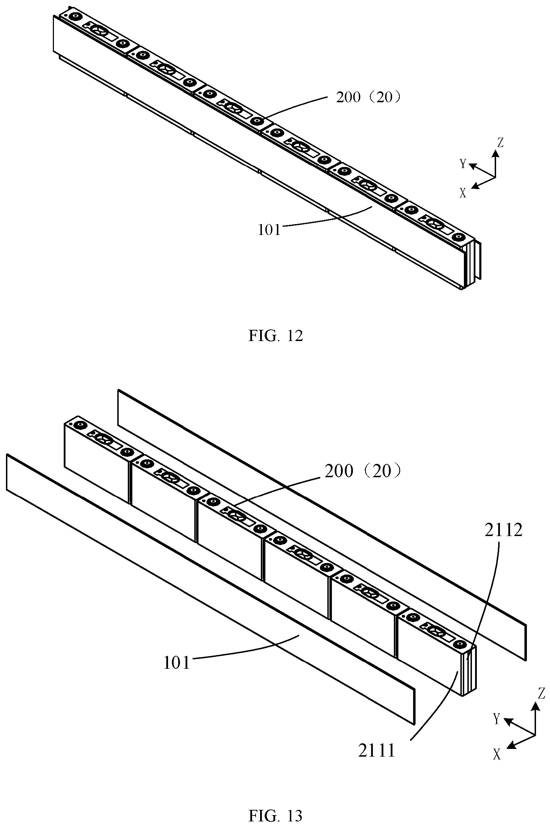

FIG. 12 is a schematic structural diagram of a row of battery cells 20 and thermal management components 101 on two sides thereof according to an embodiment of this application, and FIG. 13 is a schematic structural exploded view of the row of battery cells 20 and the thermal management components 101 on two sides thereof according to an embodiment of this application.

Optionally, as shown in FIGs. 12 to 13, in an embodiment of this application, the battery cell 20 includes two first walls 2111 opposite each other in the first direction X and two second walls 2112 opposite each other in a second direction Y, where in the second direction Y, the second walls 2112 of two adjacent battery cells 20 are opposite each other, and the second direction Y is perpendicular to the first direction X. In other words, for a square battery cell 20, its large side surface, that is, the first wall 2111, is connected to the thermal management component 101, and its small side surface, that is, the second wall 2112, is connected to the second wall 2112 of an adjacent battery cell 20, so as to form a row in the second direction Y. Such row of battery cells 20 constitute one battery cell group 200. In this way, the two first walls 2111 with a large area are used to be connected to the thermal management component 101, helping to enhance the heat exchange of the battery cell 20 and guaranteeing the performance of the battery 10.

Optionally, in some embodiments of this application, as shown in FIGs. 4, 5, 12, and 13, the battery 10 includes multiple battery cell groups 200 and multiple thermal management components 101, where the multiple battery cell groups 200 and the multiple thermal management components 101 are arranged alternately in the first direction X. The battery cell group 200 includes multiple battery cells 20 arranged in the second direction Y. In other words, multiple battery cells 20 are arranged in the second direction Y to form a battery cell group 200. The multiple battery cell groups 200 and the multiple thermal management components 101 may be arranged in an order of a thermal management component 101, a battery cell group 200, a thermal management component 101..., or in an order of a battery cell group 200, a thermal management component 101, a battery cell group 200... In this way, the multiple battery cell groups 200 and the multiple thermal management components 101 are interconnected to form a whole accommodated in the box 11, allowing for effective thermal management of each row of battery cells 20 and enhancing the overall structural strength of the battery 10, thereby improving the performance of the battery 10.

Optionally, in an embodiment of this application, the thermal management component 101 is adhered to the first wall 2111. In other words, the thermal management component 101 and the battery cell 20 may be fixedly connected through adhesion, for example, using a structural adhesive, but this is not limited in the embodiments of this application.

Optionally, the battery cell 20 may be fixedly adhered to the box 11. Optionally, adjacent battery cells 20 in each row of battery cells 20 may also be adhered. For example, the second walls 2112 of two adjacent battery cells 20 may be adhered using a structural adhesive, but this is not limited in the embodiments of this application. Fixedly adhering adjacent battery cells 20 in each row of battery cells 20 can further enhance the fixing effect of the battery cells 20.

It should be understood that relevant parts in various embodiments of this application can refer to each other, and for the sake of brevity, are not reiterated herein.

An embodiment of this application further provides an electric device, where the electric device may include the battery 10 in the foregoing embodiments. Optionally, the electric device may be a vehicle 1, ship, spacecraft, or the like, which is not limited in this embodiment of this application.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manners. This application is not limited to the specific embodiments disclosed in this specification but includes all technical solutions falling within the scope of the claims.

## Claims

1. A battery, **characterized by** comprising:
a battery cell (20); and
a thermal management component (101), wherein the thermal management component (101) is opposite the battery cell (20) along a first direction (X) and connected to a first wall (2111) of the battery cell (20), the first wall (2111) is a wall with a largest surface area of the battery cell (20), the first direction (X) is perpendicular to the first wall (2111), the thermal management component (101) comprises a flow channel (1013), and the flow channel (1013) is used for accommodating a heat exchange medium, so as to regulate a temperature of the battery cell (20),
wherein the flow channel (1013) is configured to provide a swelling space for the battery cell (20); and
the thermal management component (101) comprises a heat conducting plate (1011), the heat conducting plate (1011) is thermally connected to the first wall (2111) to exchange heat with the battery cell (20), and the heat conducting plate (1011) is configured to be deformable to provide a swelling space for the battery cell (20).

2. The battery according to claim 1, **characterized in that** a size W of the flow channel (1013) in the first direction (X) and a size D1 of the battery cell (20) in the first direction (X) satisfy 0.0025≤W/D1≤1.

3. The battery according to claim 2, **characterized in that** 0.01≤W/D1≤0.8.

4. The battery according to any one of claims 1 to 3, **characterized in that** the size W of the flow channel (1013) in the first direction (X) satisfies 0.2 mm≤W≤10 mm.

5. The battery according to any one of claims 1 to 4, **characterized in that** the thermal management component (101) comprises a pair of heat conducting plates (1011) opposite each other along the first direction (X) and a first connecting rib (1012) connecting the pair of heat conducting plates (1011), the first connecting rib (1012) and the pair of heat conducting plates (1011) form the flow channel (1013), and one of the pair of heat conducting plates (1011) is thermally connected to the first wall (2111), so as to exchange heat with the battery cell (20).

6. The battery according to claim 5, **characterized in that** a thickness D2 of the first connecting rib (1012) and a thickness D3 of the heat conducting plate (1011) satisfy 0.025≤D2/D3≤30.

7. The battery according to claim 6, **characterized in that** 0.075≤D2/D3≤15.

8. The battery according to any one of claims 5 to 7, **characterized in that** the thickness D2 of the first connecting rib (1012) satisfies 0.1 mm≤D2≤4 mm.

9. The battery according to any one of claims 5 to 8, **characterized in that** the thickness D3 of the heat conducting plate (1011) satisfies 0.1 mm≤D3≤4 mm.

10. The battery according to any one of claims 5 to 9, **characterized in that** an angle α formed by the first connecting rib (1012) and the heat conducting plate (1011) satisfies 5°≤α≤90°.

11. The battery according to claim 10, **characterized in that** 5°≤α≤85°.

12. The battery according to claim 11, **characterized in that** 9°≤α≤72°.

13. The battery according to any one of claims 5 to 12, **characterized in that** the first connecting rib (1012) is configured to be deformable, so as to provide a swelling space for the battery cell (20).

14. The battery according to any one of claims 5 to 13, **characterized in that** the size W of the flow channel (1013) in the first direction (X) and a length L of the first connecting rib (1012) satisfy 0086≤W/L≤1, wherein the length L of the first connecting rib (1012) is a distance between connection points of the first connecting rib (1012) and the pair of heat conducting plates (1011).

15. The battery according to claim 14, **characterized in that** 0.086≤W/L≤0.95.

16. The battery according to claim 15, **characterized in that** 0.15≤W/L≤0.95.

17. The battery according to any one of claims 5 to 16, **characterized in that** the connection points of the first connecting rib (1012) and the pair of heat conducting plates (1011) are each arranged as a rounded corner structure.

18. The battery according to any one of claims 5 to 17, **characterized in that** multiple first connecting ribs (1012) are provided, and any adjacent two of the first connecting ribs (1012) connected between the pair of heat conducting plates (1011) are inclined at a same angle relative to a same heat conducting plate (1011) of the heat conducting plates (1011).

19. The battery according to any one of claims 5 to 18, **characterized in that** the thermal management component (101) further comprises a second connecting rib (1014) connected to one of the pair of heat conducting plates (1011) and spaced apart from the other of the pair of heat conducting plates, and the second connecting rib (1014) is disposed between the pair of heat conducting plates (1011).

20. The battery according to claim 19, **characterized in that** the second connecting rib (1014) is perpendicular to one of the pair of heat conducting plates (1011).

21. The battery according to claim 19 or 20, **characterized in that** in the first direction (X), a projection of the second connecting rib (1014) on the heat conducting plate (1011) does not overlap with a projection of the first connecting rib (1012) on the heat conducting plate (1011).

22. The battery according to any one of claims 19 to 21, **characterized in that** a size D4 of the second connecting rib (1014) in the first direction (X) and the size W of the flow channel (1013) in the first direction (X) satisfy 0.3 mm≤D4≤(W-0.5) mm.

23. The battery according to claim 22, **characterized in that** 0.5 mm≤D4≤(W-1) mm.

24. The battery according to any one of claims 1 to 23, **characterized in that** the battery cell (20) comprises at least one first wall (2111), and each first wall (2111) is connected to at least one thermal management component (101).

25. The battery according to any one of claims 1 to 24, **characterized in that** the battery cell (20) comprises two first walls opposite each other in the first direction (X) and two second walls opposite each other in a second direction (Y), wherein in the second direction (Y), the second walls of two adjacent battery cells (20) are opposite each other, and the second direction (Y) is perpendicular to the first direction (X).

26. The battery according to any one of claims 1 to 25, **characterized in that** the battery comprises multiple battery cell groups (200) and multiple thermal management components (101), and the multiple battery cell groups (200) and the multiple thermal management components (101) are alternately arranged in the first direction (X); wherein each of the battery cell groups (200) comprises multiple battery cells (20) arranged in the second direction (Y), and the second direction (Y) is perpendicular to the first direction (X).

27. An electric device, **characterized in that** the electric device comprises the battery according to any one of claims 1 to 26, wherein the battery is configured to provide electrical energy for the electric device.
